# EUROPÄISCHE PATENTANMELDUNG

(11) **EP 3 798 125 A1**
(43) Veröffentlichungstag der Anmeldung: **31.03.2021**
(21) Anmeldenummer: 20177984.0
(22) Anmeldetag: 03.06.2020
(51) Int. Cl.: B64D 1/04, B64D 7/08, F41F 3/06, F16F 15/04

(54) **TRÄGERSYSTEM UND LUFTFAHRZEUG**

(30) Priorität: 26.09.2019 DE 102019006740
(71) Anmelder: MBDA Deutschland GmbH, 86529 Schrobenhausen (DE)
(72) Erfinder: WEBERSTETTER, Christoph, 83451 Piding (DE)
(74) Vertreter: Isarpatent

(57) **Zusammenfassung**

Die vorliegende Erfindung schafft ein Trägersystem (100) mit einer Trägerplattform (110), wobei die Trägerplattform (110) einen Schacht (111) aufweist, und einer in dem Schacht (111) der Trägerplattform (110) angeordneten Halteeinrichtung (120) zum Halten einer Last (200) in dem Schacht (111) der Trägerplattform (110), wobei die Halteeinrichtung (120) eine Dämpfungseinrichtung (121) zum Dämpfen von Schwingungen der Last (200) aufweist.

## Beschreibung

Die vorliegende Erfindung betrifft ein Trägersystem sowie ein Luftfahrzeug mit einem Trägersystem.

Im Bereich der militärischen Luftfahrt besteht das Problem der Detektion durch feindliche Sensoren (z.B. Radar). Als Lösungsansatz für dieses Problem gibt es die sogenannte Stealth-Technik. Hierbei wird das Flugzeug so optimiert, dass es eine möglichst kleine Radarsignatur aufweist. Hierfür ist ein gesamtheitlicher Ansatz notwendig. Dieser beinhaltet zum einen eine möglichst gute geometrische Auslegung des Flugzeuges und zum anderen auch das Flugzeug mit sogenannten Radar Absorbing Materials (RAM) an Stellen auszustatten, an denen es geometrisch nicht möglich ist eine Rückstreuung zu vermeiden. Ein großes Problem stellen dabei die außen am Luftfahrzeug angebrachten Lasten (z.B. Effektoren) dar, da sie die Radarstrahlen brechen, reflektieren und somit für eine Vergrößerung der Radarrückstreufläche (RCS) sorgen. Aus diesem Grund geht man dazu über die außen am Flugzeug angebrachten Lasten in einen Schacht im Flugzeuginneren zu verlegen. Dieser kann bei Bedarf geöffnet werden. Durch das Öffnen des Schachtes entstehen Druckwellen innerhalb des Schachtes welche unter Umständen eine Schwingung der in dem Schacht angeordneten Last erzeugen können. Hierdurch werden sowohl die Last als auch das Trägersystem, mit welchem das Luftfahrzeug die Last hält, zusätzlichen Belastungen ausgesetzt, welche ihre jeweiligen Lebensdauern eventuell verringern könnten.

Vor diesem Hintergrund liegt der vorliegenden Erfindung die Aufgabe zugrunde, die Lebensdauer eines Trägersystems für eine Last als auch der Last selbst zu erhöhen.

Erfindungsgemäß wird diese Aufgabe durch ein Trägersystem mit den Merkmalen des Patentanspruchs 1 und durch ein Luftfahrzeug mit den Merkmalen des Patentanspruchs 9 gelöst.

Demgemäß ist ein Trägersystem vorgesehen. Das Trägersystem umfasst eine Trägerplattform, wobei die Trägerplattform einen Schacht aufweist, und eine in dem Schacht der Trägerplattform angeordneten Halteeinrichtung zum Halten einer Last in dem Schacht der Trägerplattform, wobei die Halteeinrichtung eine Dämpfungseinrichtung zum Dämpfen von Schwingungen der Last aufweist.

Darüber hinaus ist ein Luftfahrzeug vorgesehen. Das Luftfahrzeug umfasst ein erfindungsgemäßes Trägersystem.

Die der vorliegenden Erfindung zugrunde liegende Idee besteht darin, durch Druckwellen erzwungene Schwingungen der gehaltenen Last mittels einer Dämpfungseinrichtung abzuschwächen. Demnach können die Auswirkungen der auf die Last und über die Halteeinrichtung auf die Trägerplattform einwirkenden Kräfte reduziert werden. Eine Resonanzkatastrophe die zu einer schweren Beschädigung oder gar der Zerstörung der Last und/oder der Trägerplattform führen könnte, wird vorteilhafter Weise vermieden. Auch langfristige Auswirkungen von weniger starken, erzwungenen Schwingungen werden vorteilhaft reduziert, was insgesamt zu einer Verlängerung der Lebensdauer der Halteeinrichtung und Trägerplattform führt.

Vorteilhafte Ausgestaltungen und Weiterbildungen ergeben sich aus den weiteren Unteransprüchen sowie aus der Beschreibung unter Bezugnahme auf die Figuren.

Gemäß einer Weiterbildung kann die Dämpfungseinrichtung als passive Dämpfungseinrichtung ausgebildet sein. Eine passive Dämpfungseinrichtung funktioniert unabhängig von weiteren Bauteilen, wie etwa Energieversorgung oder Sensoren. Die Funktion der Dämpfungseinrichtung kann daher mit vorteilhafter Zuverlässigkeit gewährleistet werden.

Gemäß einer Weiterbildung kann die Dämpfungseinrichtung eine Feder und einen Dämpfer aufweisen. Diese Bauteile sind besonders simpel in ihrer Wirkungsweise und damit auch robust. Hierdurch kann in vorteilhafter Weise eine Wartung und Instandhaltung der Dämpfungseinrichtung vereinfacht werden.

Gemäß einer Weiterbildung kann die Dämpfungseinrichtung dazu ausgebildet sein, eine Eigenfrequenz der Last zu dämpfen. Hierdurch wird das Auftreten einer Resonanzkatastrophe mit vorteilhafter Sicherheit verhindert.

Gemäß einer weiteren Ausführungsform kann die Dämpfungseinrichtung als aktive Dämpfungseinrichtung ausgebildet sein. Eine aktive Dämpfungseinrichtung ist leicht an eine Abschwächung verschiedener Schwingungsfrequenzen anpassbar. Das Trägersystem ist daher vorteilhafter Weise für das Tragen verschiedener Lasten ohne Modifikation der Dämpfungseinrichtung geeignet.

Gemäß einer Weiterbildung kann die Dämpfungseinrichtung ein Aktuatorsystem aufweisen. Ein Aktuatorsystem erlaubt eine genaue Kontrolle der Gegensteuerung gegen die erzwungene Schwingung. Die erzwungene Schwingung wird dadurch vorteilhaft effektiv unterdrückt.

Gemäß einer Weiterbildung kann die Dämpfungseinrichtung einen Beschleunigungssensor aufweisen. Mit einem Beschleunigungssensor kann die reale erzwungene Schwingung erfasst werden. Eine optimierte Dämpfung der real vorhandenen Schwingung ist daher vorteilhafter Weise in Echtzeit möglich.

Gemäß einer weiteren Ausführungsform kann der Schacht der Trägerplattform eine Öffnung aufweisen, und das Trägersystem eine Verschlusseinrichtung zum Verschließen der Öffnung des Schachts der Trägerplattform aufweisen. Hierdurch wird die Zeitdauer, in welcher Schwingungen durch äußere Einflüsse erzwungen werden, verringert. Dies trägt in vorteilhafte Weise zu der Erhöhung der Lebensdauer der Trägerplattform und der Halteeinrichtung bei.

Gemäß einer weiteren Ausführungsform kann die Trägerplattform einen integralen Bestandteil des Luftfahrzeugs bilden. Hierdurch kann die Trägerplattform besonders vorteilhaft an weitere für das Luftfahrzeug gewünschte Eigenschaften, wie etwa das Vermeiden einer Detektion durch Radar, angepasst werden.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die vorliegende Erfindung wird nachfolgend anhand der in den schematischen Figuren angegebenen Ausführungsbeispiele näher erläutert. Es zeigen dabei:
- Fig. 1: ein schematisches Diagramm einer ersten Ausführungsform eines Trägersystems; und
- Fig. 2: ein schematisches Diagramm einer zweiten Ausführungsform eines Trägersystems.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

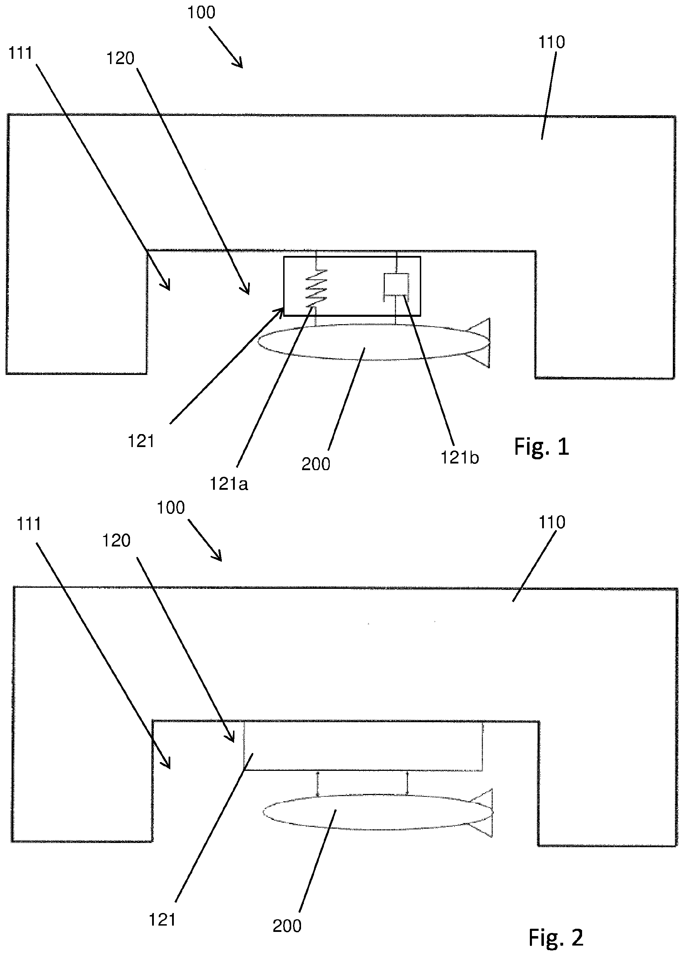

Fig. 1 zeigt ein Trägersystem 100 zum Tragen einer Last 200. Das Trägersystem 100 weist eine Trägerplattform 110 und eine Halteeinrichtung 120 auf. Die Trägerplattform 110 weist einen Schacht 111 auf. Die Halteeinrichtung 120 ist in dem Schacht 111 der Trägerplattform 110 angeordnet und weist eine Dämpfungseinrichtung 121 auf. Die Halteeinrichtung 120 hält die Last 200.

In der in Fig. 1 gezeigten Ausführungsform ist die Dämpfungseinrichtung 121 als passive Dämpfungseinrichtung ausgebildet und weist eine Feder 121a und einen Dämpfer 121b auf.

Änderungen des Luftdrucks innerhalb des Schachtes 111 führen zur Einwirkung einer Kraft auf die Last 200 und erzeugen dadurch Schwingungen derselben. Falls sich der Luftdruck periodisch ändert führt dies zu einer erzwungenen Schwingung der Last 200, deren Amplitude von dem Verhältnis der Frequenz der Luftdruckänderung zu der Eigenfrequenz der getragenen Last 200 abhängt, wobei die Amplitude bei Übereinstimmung der beiden Frequenzen am höchsten ist.

Die Dämpfungseinrichtung 121 schwächt diese erzwungene Schwingung ab und kann somit eine zu starke Auslenkung der Last, welche die Last unter Umständen beschädigen könnte, verhindern. Insbesondere ist es hierbei von Vorteil, wenn die Dämpfungseinrichtung 121 derart ausgebildet ist, dass sie eine Schwingung mit der Eigenfrequenz der getragenen Last 200 besonders effektiv abschwächt.

Die Dämpfungseinrichtung 121 vermindert darüber hinaus auch die Übertragung der Schwingungsenergie auf die Trägerplattform 110 und auf eventuell vorhandene, weitere mit der Trägerplattform 110 verbundene Bauteile. Eine Beschädigung dieser Bauteile oder der Trägerplattform 110 durch die auf sie einwirkenden, von der Schwingung verursachten Kräfte wird dadurch ebenfalls vermieden.

Die als passive Dämpfungseinrichtung mit einer Feder 121a und einem Dämpfer 121b ausgebildete Dämpfungseinrichtung 121 ist aufgrund ihrer simplen Konstruktion besonders widerstandsfähig und wenig anfällig gegenüber Störungen und Ausfällen. Sie kann daher mit großer Zuverlässigkeit über einen großen Zeitraum hinweg verwendet werden, was auch Kosten für Wartungsarbeiten verringert.

Die Feder 121a kann für die hier gezeigte Dämpfungseinrichtung 121 in vielfacher Weise, etwa als Schraubenfeder, Gasdruckfeder oder dergleichen ausgebildet sein. Der Dämpfungseffekt des Dämpfers 121b kann durch hydraulische Dämpfung, Reibungsdämpfung oder dergleichen erzielt werden. Die Feder 121a und der Dämpfer 121b sind hier als separate Bauteile dargestellt. Natürlich ist es auch denkbar die Feder 121a und den Dämpfer 121b in einem Bauteil zu kombinieren. Es können auch mehrere Federn und/oder Dämpfer vorgesehen sein. So kann etwa, falls die Last 200 an zwei Haltepunkten mit der Trägerplattform 110 verbunden sein soll, an beiden Haltepunkten jeweils eine Dämpfungseinrichtung 121 mit jeweils einer Feder 121a und einem Dämpfer 121b vorgesehen sein.

Fig. 2 zeigt eine weitere Ausführungsform eines Trägersystems 100. Das Trägersystem 100 weist eine Trägerplattform 110 und eine Halteeinrichtung 120 auf. Die Trägerplattform 110 weist einen Schacht 111 auf. Die Halteeinrichtung 120 ist in dem Schacht 111 der Trägerplattform 110 angeordnet und weist eine Dämpfungseinrichtung 121 auf. Die Halteeinrichtung 120 hält die Last 200.

In der in Fig. 2 gezeigten Ausführungsform ist die Dämpfungseinrichtung 121 als aktive Dämpfungseinrichtung ausgebildet.

Die Funktionsweise der in Fig. 2 gezeigten Dämpfungseinrichtung 121 entspricht im Wesentlichen der in Bezug auf Fig. 1 beschriebenen Funktionsweise.

Im Gegensatz zum Ausführungsbeispiel aus Fig. 1, ist die in Fig. 2 gezeigte Dämpfungseinrichtung 121 als aktive Dämpfungseinrichtung ausgebildet. Die Dämpfungseinrichtung 121 kann etwa ein Aktuatorsystem und einen Bewegungssensor aufweisen. Der Bewegungssensor erkennt die Bewegung der in der Last 200 erzwungenen Schwingung und die Aktuatoren des Aktuatorsystems werden zur Abschwächung der Schwingungsbewegung aktiviert.

Die Dämpfungseinrichtung 121 kann somit der real vorhandenen, erzwungenen Schwingung der Last 200 effektiv und in Echtzeit entgegenwirken, was den Nutzen der Dämpfungseinrichtung 121 vorteilhaft verbessert. Ein weiterer Vorteil liegt darin, dass verschiedene Lasten 200 von dem Trägersystem 100 getragen werden können, ohne dass eine Modifikation der Dämpfungseinrichtung 121 notwendig wird.

### Bezugszeichenliste

- 100: Trägersystem
- 110: Trägerplattform
- 111: Schacht
- 120: Halteeinrichtung
- 121: Dämpfungseinrichtung
- 121a: Feder
- 121b: Dämpfer
- 200: Last

## Patentansprüche

1. Trägersystem (100), mit:
einer einen Schacht (111) aufweisenden Trägerplattform (110); und
einer in dem Schacht (111) der Trägerplattform (110) angeordneten Halteeinrichtung (120) zum Halten einer Last (200) in dem Schacht (111) der Trägerplattform (110), welche eine Dämpfungseinrichtung (121) zum Dämpfen von Schwingungen der Last (200) aufweist.

2. Trägersystem (100) nach Anspruch 1, wobei die Dämpfungseinrichtung (121) als passive Dämpfungseinrichtung ausgebildet ist.

3. Trägersystem (100) nach Anspruch 2, wobei die Dämpfungseinrichtung (121) eine Feder (121a) und einen Dämpfer (121b) aufweist.

4. Trägersystem (100) nach Anspruch 2 oder Anspruch 3, wobei die Dämpfungseinrichtung (121) dazu ausgebildet ist, eine Eigenfrequenz der Last (200) zu dämpfen.

5. Trägersystem (100) nach Anspruch 1, wobei die Dämpfungseinrichtung (121) als aktive Dämpfungseinrichtung ausgebildet ist.

6. Trägersystem (100) nach Anspruch 5, wobei die Dämpfungseinrichtung (121) ein Aktuatorsystem aufweist.

7. Trägersystem (100) nach Anspruch 5 oder Anspruch 6, wobei die Dämpfungseinrichtung (121) einen Beschleunigungssensor aufweist.

8. Trägersystem (100) nach einem der vorhergehenden Ansprüche, wobei der Schacht (111) der Trägerplattform (110) eine Öffnung aufweist, und das Trägersystem (100) eine Verschlusseinrichtung zum Verschließen der Öffnung des Schachts (111) der Trägerplattform (110) aufweist.

9. Luftfahrzeug mit einem Trägersystem (100) nach einem der vorhergehenden Ansprüche.

10. Luftfahrzeug nach Anspruch 9, wobei die Trägerplattform (110) einen integralen Bestandteil des Luftfahrzeugs bildet.
